# EUROPEAN PATENT APPLICATION

(11) **EP 4 682 818 A1**
(43) Date of publication of application: **21.01.2026**
(21) Application number: 24306196.7
(22) Date of filing: 16.07.2024
(51) Int. Cl.: G06T 5/60

(54) **IMPROVING IMAGE QUALITY IN VOLUMETRIC ANGIOGRAPHIC IMAGES**

(71) Applicant: Koninklijke Philips N.V., 5656 AG Eindhoven (NL)
(72) Inventor: HENDRIKS, Bernardus, 5656 Eindhoven (NL); FLORENT, Raoul, 5656 Eindhoven (NL); OLIVAN BESCOS, Javier, 5656 Eindhoven (NL); GRASS, Michael, 5656 Eindhoven (NL); ELENBAAS, Thijs, 5656 Eindhoven (NL); VAN MOURIK, Martijn, 5656 Eindhoven (NL)
(74) Representative: Philips Intellectual Property & Standards

(57) **Abstract**

A system for improving image quality in volumetric angiographic images, is provided. The system includes one or more processors configured to input a volumetric angiographic image (120) representing a vessel tree into a machine learning algorithm (130). The machine learning algorithm is trained to generate, based on the inputted volumetric angiographic image, a corrected volumetric angiographic image (140) wherein an image quality of the vessel tree is improved as compared to in the inputted volumetric angiographic image. The one or more processors are also configured to output the corrected volumetric angiographic image (140). The machine learning algorithm (130) is trained to generate the corrected volumetric angiographic image (140) using training data (150) comprising a plurality of vessel image pairs, each vessel image pair comprising a volumetric angiographic image (150a) representing a vessel and a corresponding volumetric intravascular image (150b) representing the vessel.

## Description

### TECHNICAL FIELD

The present disclosure relates to improving image quality in volumetric angiographic images. A system, a computer-implemented method, and a computer program product, are disclosed.

### BACKGROUND

Vascular investigations are often performed using both volumetric angiographic images and intravascular images. For instance, a volumetric angiographic image may be used to perform an initial diagnosis of a blood vessel. If an interventional procedure is deemed necessary, or if further information is needed in order to perform the diagnosis, intravascular images of the blood vessel may then be acquired. Examples of volumetric angiographic images include (coronary) computed tomography "CT" images, coronary computed tomography angiography "CCTA" images, magnetic resonance imaging "MRI" images, positron emission tomography "PET" images, and 3D ultrasound "US" images. Examples of intravascular images include intravascular ultrasound "IVUS" images, optical coherence tomography "OCT" images, and intravascular photoacoustic "IVPA" images.

Volumetric angiographic images provide comprehensive information relating to the shapes of vessel paths, and also the condition of vessels in the vasculature. Consequently they are valuable source of information when diagnosing a vessel. They may be used to diagnose vascular conditions such as coronary artery disease "CAD", for example. Volumetric angiographic images are also a valuable source of information in the planning of a subsequent interventional procedure. However, despite recent advances in medical imaging, there are limitations to the image quality of volumetric angiographic images. For instance, vessel diameters depicted in CT images can be inaccurate as a result of the poor visualization in such images of the thin fibrous cap that covers vessel plaque, and also the poor visualization of thrombi that may be present in a vessel. The thickness of the thin fibrous cap is a useful factor in assessing the risk of the plaque's vulnerability to rupture. The presence, and also the size, of thrombi is a useful factor in assessing the need, and also how to treat a vessel. CT images can also suffer from image artifacts such as blooming; an artifact in which the relatively high density of calcium deposits in blood vessels causes them to appear larger than their true size. This can result in an over-estimation of the calcium thickness in CT images and thereby confound a diagnosis of the vessel. CT images can also suffer from blurring as a result of their limited image resolution. Drawbacks such as these in the image quality of volumetric angiographic images hamper the reliability of diagnoses that are performed using volumetric angiographic images.

On the other hand, intravascular images, such as those acquired using IVUS, OCT, IVPA, typically have relatively higher image quality and relatively higher image resolution than volumetric angiographic images. Consequently, intravascular images may be acquired subsequent to a volumetric angiographic image in order to further diagnose a vascular condition, and to further plan, an interventional procedure.

However, intravascular images also have drawbacks. For instance, their acquisition is both invasive, and time-consuming. Intravascular images are typically performed during a pullback procedure wherein an intravascular imaging device is routed to a starting point in a vessel and then withdrawn. If intravascular images are required for vessels that are located in different branches of a vessel tree, the intravascular imaging device needs to be re-routed to a starting point in each vessel prior to being withdrawn. This extends the duration of a vascular investigation.

Consequently, there is a need to provide vascular images with improved image quality and in a more efficient manner.

### SUMMARY

According to one aspect of the present disclosure, a system for improving image quality in volumetric angiographic images, is provided. The system includes one or more processors configured to:
receive a volumetric angiographic image representing a vessel tree;
input the volumetric angiographic image into a machine learning algorithm, the machine learning algorithm being trained to generate, based on the inputted volumetric angiographic image, a corrected volumetric angiographic image wherein an image quality of the vessel tree is improved as compared to in the inputted volumetric angiographic image; and
output the corrected volumetric angiographic image; and
wherein the machine learning algorithm is trained to generate the corrected volumetric angiographic image using training data comprising a plurality of vessel image pairs, each vessel image pair comprising a volumetric angiographic image representing a vessel and a corresponding volumetric intravascular image representing the vessel.

In the above-described system, the machine learning algorithm generates a corrected volumetric angiographic image from an inputted volumetric angiographic image representing a vessel tree. In the corrected volumetric angiographic image, the image quality of the vessel tree is improved as compared to in the inputted volumetric angiographic image. Thus, the corrected volumetric angiographic image enables a physician to make a more reliable diagnosis of a vessel. The training data that is used to train the machine learning algorithm includes a plurality of vessel image pairs. Each vessel image pair includes a volumetric angiographic image representing a vessel and a corresponding volumetric intravascular image representing the vessel. In other words, each vessel image pair includes a volumetric intravascular image representing an individual, i.e. a single, vessel, and a corresponding volumetric angiographic image representing the vessel. Such vessel image pairs are typically available from historic interventional procedures because intravascular images are typically only acquired for individual vessels. Since the machine learning algorithm is trained using such vessel image pairs, it can be trained with existing datasets. In other words, it can be trained in a straightforward manner. At inference, the system uses the trained machine learning algorithm to generate a corrected volumetric angiographic image in which an image quality of the vessel tree is improved as compared to in the inputted volumetric angiographic image. In other words, the system generates an image in which the image quality of multiple vessels in the vessel tree is improved. This enables a physician to perform a reliable diagnosis of a vessel in the vessel tree in a more efficient manner because it obviates the need to acquire intravascular images of the vessel.

Further aspects, features, and advantages of the present disclosure will become apparent from the following description of examples, which is made with reference to the accompanying drawings.

### BRIEF DESCRIPTION OF THE DRAWINGS

Fig. 1 is a schematic diagram illustrating an example of a system 100 for improving image quality in volumetric angiographic images, in accordance with some aspects of the present disclosure.
Fig. 2 is a flowchart illustrating an example of a computer-implemented method of improving image quality in volumetric angiographic images, in accordance with some aspects of the present disclosure.
Fig. 3 is a schematic diagram illustrating an example of various elements of a method of improving image quality in volumetric angiographic images, in accordance with some aspects of the present disclosure.

### DETAILED DESCRIPTION

Examples of the present disclosure are provided with reference to the following description and Figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a computer-implemented method, may be implemented in a computer program product, and in a system, in a corresponding manner.

In the following description, reference is made to a system for improving image quality in volumetric angiographic images. In some examples, reference is made to improving image quality in volumetric angiographic images that represent a vessel tree in the heart, i.e. in a coronary volumetric angiographic image. However, it is noted that the system may be used to improve image quality in volumetric angiographic images that represent vessel trees that are located in other anatomical regions. For instance, the system may be used to improve image quality in volumetric angiographic images that represent a portion of the heart, the lung, the leg, the arm, the brain, and so forth. It is also noted that in general, the system may be used to improve image quality in volumetric angiographic images that represent different types of vessels. For instance, the system may be used to improve image quality in volumetric angiographic images that represent arteries, veins, capillaries, and so forth

It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The functions of one or more of the method features may for instance be provided by processors that are shared within a networked processing architecture such as a client/server architecture, a peer-to-peer architecture, the Internet, or the Cloud.

The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid-state memories, magnetic tape, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray^{™} and DVD.

It is also noted that some operations that are described as being performed by the one or more processors of the system disclosed herein may be implemented using artificial intelligence techniques. Suitable techniques may include machine learning techniques, deep learning techniques, and neural networks. For instance, one or more neural networks, may be trained in a supervised, or in some cases unsupervised, manner, to implement the operations that are performed by the one or more processors.

As mentioned above, there is a need to provide vascular images with improved image quality and in a more efficient manner.

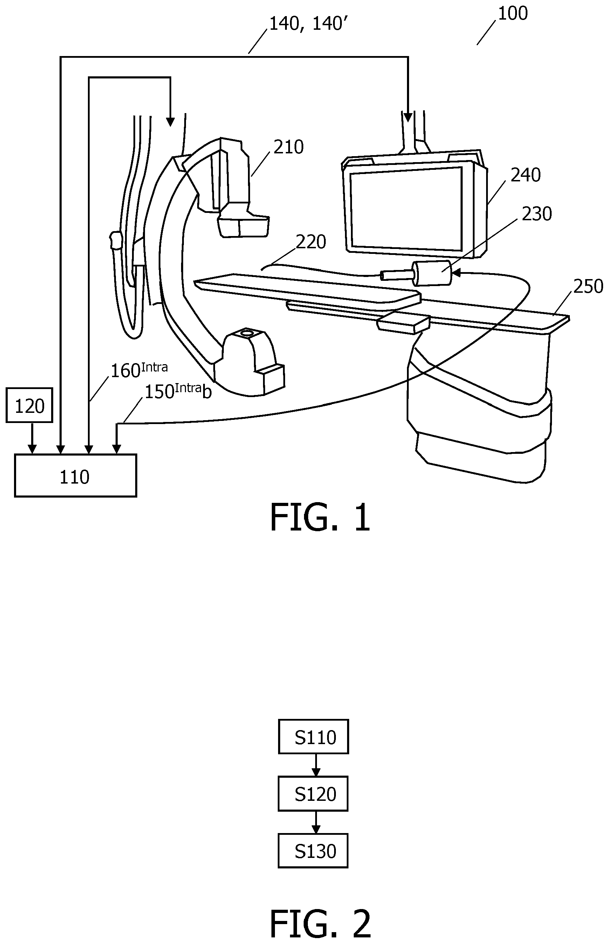

Fig. 1 is a schematic diagram illustrating an example of a system 100 for improving image quality in volumetric angiographic images, in accordance with some aspects of the present disclosure. Fig. 2 is a flowchart illustrating an example of a computer-implemented method of improving image quality in volumetric angiographic images, in accordance with some aspects of the present disclosure. It is noted that operations that are described as being performed by the one or more processors 110 of the system 100 illustrated in Fig. 1, may also be performed in the method illustrated in Fig. 2. Likewise, operations that are described in relation to the method described with reference to Fig. 2 may also be performed by the one or more processors 110 of the system 100 illustrated in Fig. 1. With reference to Fig. 1, and Fig. 2, the system 100 for improving image quality in volumetric angiographic images, comprises one or more processors 110 configured to:
receive S110 a volumetric angiographic image 120 representing a vessel tree;
input S120 the volumetric angiographic image 120 into a machine learning algorithm 130, the machine learning algorithm being trained to generate, based on the inputted volumetric angiographic image, a corrected volumetric angiographic image 140 wherein an image quality of the vessel tree is improved as compared to in the inputted volumetric angiographic image; and
output S130 the corrected volumetric angiographic image 140; and
wherein the machine learning algorithm 130 is trained to generate the corrected volumetric angiographic image 140 using training data 150 comprising a plurality of vessel image pairs, each vessel image pair comprising a volumetric angiographic image 150a representing a vessel and a corresponding volumetric intravascular image 150b representing the vessel.

In the above-described system, the machine learning algorithm generates a corrected volumetric angiographic image from an inputted volumetric angiographic image representing a vessel tree. In the corrected volumetric angiographic image, the image quality of the vessel tree is improved as compared to in the inputted volumetric angiographic image. Thus, the corrected volumetric angiographic image enables a physician to make a more reliable diagnosis of a vessel. The training data that is used to train the machine learning algorithm includes a plurality of vessel image pairs. Each vessel image pair includes a volumetric angiographic image representing a vessel and a corresponding volumetric intravascular image representing the vessel. In other words, each vessel image pair includes a volumetric intravascular image representing an individual, i.e. a single, vessel, and a corresponding volumetric angiographic image representing the vessel. Such vessel image pairs are typically available from historic interventional procedures because intravascular images are typically only acquired for individual vessels. Since the machine learning algorithm is trained using such vessel image pairs, it can be trained with existing datasets. In other words, it can be trained in a straightforward manner. At inference, the system uses the trained machine learning algorithm to generate a corrected volumetric angiographic image in which an image quality of the vessel tree is improved as compared to in the inputted volumetric angiographic image. In other words, the system generates an image in which the image quality of multiple vessels in the vessel tree is improved. This enables a physician to perform a reliable diagnosis of a vessel in the vessel tree in a more efficient manner because it obviates the need to acquire intravascular images of the vessel.

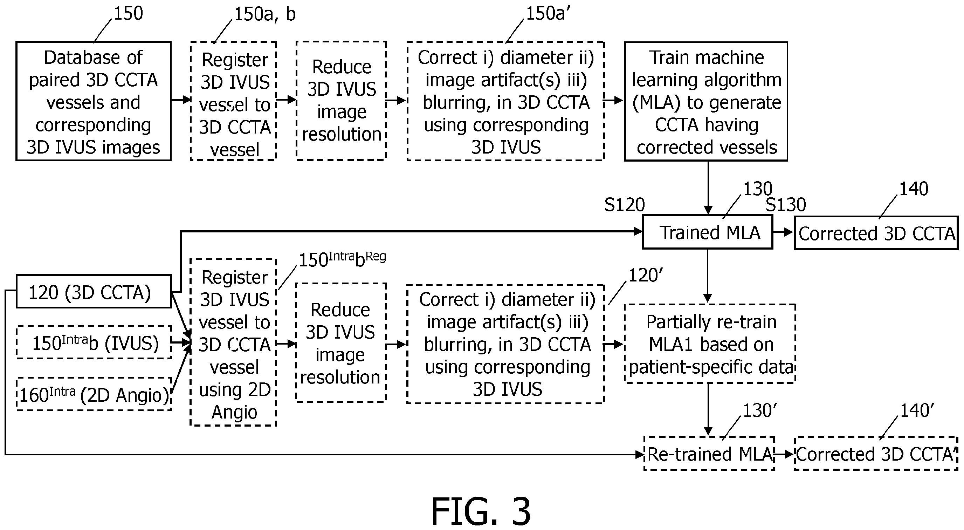

The operations that are performed by the processor(s) 110 of the system 100 described above are described in more detail below, and with further reference to Fig. 3. Fig. 3 is a schematic diagram illustrating an example of various elements of a method of improving image quality in volumetric angiographic images, in accordance with some aspects of the present disclosure. It is noted that the elements illustrated within dashed boxes in Fig. 3 are optional in some implementations.

Referring initially to the operation S110 illustrated in Fig. 2; in this operation a volumetric angiographic image 120 is received. The volumetric angiographic image 120 represents a vessel tree.

The volumetric angiographic image 120 that is received in the operation S120 may represent a vessel tree that is disposed in various anatomical regions. In general, the vessel tree may be disposed in any anatomical region. Thus, the volumetric angiographic image 120 may represent a vessel tree that is disposed in the heart, or in another part of the anatomy, such as the brain, the lung, the leg, and so forth. The vessel tree may include multiple vessels. In general, the vessels may be of any type. For instance, the vessels may be arteries, veins, capillaries, and so forth.

The volumetric angiographic image 120 that is received in the operation S110 may be generated by various types of volumetric imaging systems. For instance, it may be generated by a computed tomography "CT" imaging system, or by a magnetic resonance imaging "MRI" system, or by a 3D ultrasound imaging system. The CT imaging system may be a spectral CT imaging system. Spectral CT imaging systems generate X-ray attenuation data representing X-ray attenuation within multiple different energy intervals. The X-ray attenuation data generated by a spectral CT imaging system may be processed, e.g. using various material decomposition algorithms, in order to distinguish between media that have similar X-ray attenuation values when measured within a single energy interval, and which would be indistinguishable in X-ray attenuation data obtained using a conventional CT imaging system. Thus, X-ray attenuation data generated by spectral CT imaging systems may be processed to provide a volumetric angiographic image with improved specificity to materials such as contrast agent, tissue, bone, and so forth.

The volumetric angiographic image 120 that is received in the operation S110 may alternatively be generated by rotating an X-ray source-detector arrangement of a projection X-ray imaging system around a region of interest whilst acquiring X-ray projection data from multiple rotational angles with respect to the region of interest. The X-ray projection data from the multiple rotational angles may then be reconstructed using CT image reconstruction techniques to provide a volumetric angiographic image 120.

In some examples, the volumetric angiographic image 120 that is received in the operation S 110 is generated subsequent to the injection of a contrast agent into the vasculature of a patient. The volumetric angiographic image 120 that is received in the operation S 110 may therefore represent a distribution of a contrast agent in the vessel tree. The contrast agent serves to improve the contrast between blood and surrounding tissue in the volumetric angiographic image 120. In these examples, the volumetric angiographic image 120 may be referred-to as a contrast-enhanced volumetric angiographic image. Contrast-enhanced volumetric angiographic images may be generated by a (spectral) CT imaging system, or by an MRI system. MRI volumetric angiographic images may alternatively be generated in the absence of a contrast agent, and are often referred-to as non-contrast-enhanced MR angiography "NC-MRA" images.

With continued reference to the operation S110; the volumetric angiographic image 120 may be received from various sources in the operation S110. For example, the volumetric angiographic image 120 may be received from an imaging system such as one of the example imaging systems described above. The volumetric angiographic image 120 may alternatively be received from another source, such as a computer readable storage medium, the Internet, the Cloud, and so forth. In general, the volumetric angiographic image 120 may be received by the one or more processors 110 via any form of data communication. For example, the volumetric angiographic image 120 may be received via wired, or wireless, or optical fiber communication. By way of some examples, when wired data communication is used, the communication may take place via electrical signals that are transmitted on an electrical cable. When wireless data communication is used, the communication may take place via RF or infrared signals. When an optical fiber data communication is used, the communication takes place via optical signals that are transmitted on an optical fiber.

Referring now to the operation S 120 illustrated in Fig. 2; in this operation the volumetric angiographic image 120 is inputted into a machine learning algorithm 130. The machine learning algorithm 130 is trained to generate, based on the inputted volumetric angiographic image, a corrected volumetric angiographic image 140 wherein an image quality of the vessel tree is improved as compared to in the inputted volumetric angiographic image. The operation S 120 is also illustrated in Fig. 3, for the example in which the volumetric angiographic image 120 is a 3D CCTA image.

With reference to Fig. 3, the machine learning algorithm 130 is trained to generate the corrected volumetric angiographic image 140 using the training data 150 illustrated in the top left-hand portion of Fig. 3. The training data 150 comprises a plurality of vessel image pairs. Each vessel image pair comprises a volumetric angiographic image 150a representing a vessel and a corresponding volumetric intravascular image 150b representing the vessel.

As mentioned above, such vessel image pairs are typically available from historic interventional procedures. The volumetric angiographic image 150a may be generated from a pre-procedural stage of a historic interventional procedure, for example. The volumetric intravascular image 150b may be generated at a peri-procedural phase, or at an intra-procedural phase of the historic interventional procedure. The volumetric intravascular image 150b may for example be a volumetric IVUS image, or a volumetric image generated by another intravascular imaging modality, such as OCT, or IVPA, for example. Such images typically have relatively higher image quality and relatively higher image resolution than volumetric angiographic images.

Various types of image quality may be improved in the corrected volumetric angiographic image 140 that is generated by the machine learning algorithm 130, some of which are described in more detail below. For example, a vessel diameter, or an image artifact, or blurring may be corrected in the corrected volumetric angiographic image 140. Other image quality aspects may also be improved in the corrected volumetric angiographic image 140 that is generated by the machine learning algorithm. For example, a resolution, or a sharpness, or a contrast of the image may be improved.

Referring now to the operation S130 illustrated in Fig. 2; in this operation the corrected volumetric angiographic image 140 is outputted. The corrected volumetric angiographic image 140 may be outputted in various ways, including to a display device such as to the monitor 240 illustrated in Fig. 1, or to a virtual/ augmented reality display device, or to a printer, or to a computer-readable storage medium, or to the Internet, or to the Cloud, and so forth.

Various types of machine learning algorithms may be used as the machine learning algorithm 130 in the system 100 described above. For instance, a neural network having a Convolutional Neural Network "CNN" architecture, or a Generative Adversarial Network "GAN" architecture, or another architecture may be used. The neural network may be trained using various techniques, including via supervised, semi-supervised, and unsupervised learning, for example. Examples of machine learning algorithms that may be used as the machine learning algorithm 130 are disclosed in the document "A review on medical imaging synthesis using deep learning and its clinical applications", by Wang, T., et al., J Appl Clin Med Phys 2021; 22:1:11-36. The techniques described in this document may be used to train machine learning algorithms to synthesize corrected volumetric angiographic images. By way of another example, a GAN such as the GAN disclosed in the document "Deep CT to MR Synthesis Using Paired and Unpaired Data", by Jin, C-B., et al., Sensors 2019, 19, 2361, may be used as the machine learning algorithm 130. The GAN described in this document may likewise be trained to synthesize corrected volumetric angiographic images.

In general, the training of the neural network involves inputting training data into the neural network, and iteratively adjusting the neural network's parameters until the trained neural network provides an accurate output. The parameters, or more particularly the weights and biases, control the operation of activation functions in the neural network. In supervised learning, the training process automatically adjusts the weights and the biases, such that when presented with the input data, the neural network accurately provides the corresponding expected output data. In order to do this, the value of the loss functions, or errors, are computed based on a difference between predicted output data and the expected output data. The expected output data is also known as the ground truth. The value of the loss function may be computed using functions such as the negative log-likelihood loss, the mean absolute error (or L1 norm), the mean squared error, the root mean squared error (or L2 norm), the Huber loss, or the (binary) cross entropy loss. During training, the value of the loss function is typically minimized, and training is terminated when the value of the loss function satisfies a stopping criterion. Sometimes, training is terminated when the value of the loss function satisfies one or more of multiple criteria.

Various methods are known for solving the loss minimization problem, including gradient descent, Quasi-Newton methods, and so forth. Various algorithms have been developed to implement these methods and their variants, including but not limited to Stochastic Gradient Descent "SGD", batch gradient descent, mini-batch gradient descent, Gauss-Newton, Levenberg Marquardt, Momentum, Adam, Nadam, Adagrad, Adadelta, RMSProp, and Adamax "optimizers" These algorithms compute the derivative of the loss function with respect to the model parameters using the chain rule. This process is called backpropagation since derivatives are computed starting at the last layer or output layer, moving toward the first layer or input layer. These derivatives inform the algorithm how the model parameters must be adjusted in order to minimize the error function. That is, adjustments to model parameters are made starting from the output layer and working backwards in the network until the input layer is reached. In a first training iteration, the initial weights and biases are often randomized. The neural network then predicts the output data, which is likewise, random. Backpropagation is then used to adjust the weights and the biases. The training process is performed iteratively by making adjustments to the weights and biases in each iteration. Training is terminated when the error, or difference between the predicted output data and the expected output data, is within an acceptable range for the training data, or for some validation data. Subsequently the neural network may be deployed, and the trained neural network makes predictions on new input data using the trained values of its parameters. If the training process was successful, the trained neural network accurately predicts the expected output data from the new input data.

The training of a neural network is often performed using a Graphics Processing Unit "GPU" or a dedicated neural processor such as a Neural Processing Unit "NPU" or a Tensor Processing Unit "TPU". Training often employs a centralized approach wherein cloud-based or mainframe-based neural processors are used to train a neural network. Following its training with the training dataset, the trained neural network may be deployed to a device for analyzing new input data during inference. The processing requirements during inference are significantly less than those required during training, allowing the neural network to be deployed to a variety of systems such as laptop computers, tablets, mobile phones and so forth. Inference may for example be performed by a Central Processing Unit "CPU", a GPU, an NPU, a TPU, on a server, or in the cloud.

One or more further operations may also be performed on the training data 150 in the context of training the machine learning algorithm 130. These are illustrated in the upper row of dashed boxes in Fig. 3.

In one example, for at least some of the vessel image pairs in the training data 150, the volumetric intravascular image 150b is registered to the corresponding volumetric angiographic image 150a.

This example is illustrated in the first dashed box in the upper branch of Fig. 3. A volumetric intravascular image typically includes a series of planar images representing cross sectional slices through different positions along the vessel. The planar images are acquired during a pullback procedure during which an intravascular imaging device is translated along the vessel. The images are then stacked along a straight vessel axis to provide a volumetric intravascular image representing the vessel. The images are typically stacked such that the centers of the vessel lumens in the planar images lie along the straight vessel axis. A straight vessel axis is used because intravascular imaging modalities do not inherently acquire spatial information defining the position and orientation of each acquired planar image which would otherwise enable their stacking along an actual path of the vessel. In other words, the shape of the vessel path in a volumetric intravascular image is typically a straight line and does not correspond to its actual shape.

The effect of the registration that is performed in example is to deform the shape of the vessel path in the volumetric intravascular image such that it corresponds to the shape of the vessel path in the volumetric angiographic image. Improving the correspondence between the shape of the vessel path in the volumetric intravascular image and the shape of the vessel path in the volumetric angiographic image via this registration may improve the reliability of the predictions that generated by the trained machine learning algorithm 130.

Known image registration techniques may be used to perform the registration in this example. The registration may include an inelastic (i.e. rigid) registration and/or an elastic registration. For instance, an initial inelastic registration may be performed in order to roughly align the volumetric intravascular image 150b to the corresponding volumetric angiographic image 150a. An elastic registration may subsequently be performed in order to deform the shape of the vessel path in the volumetric intravascular image such that it corresponds to the shape of the vessel path in the volumetric angiographic image.

In one example, for at least some of the vessel image pairs in the training data 150, the machine learning algorithm 130 is trained to generate the corrected volumetric angiographic image 140 using the volumetric angiographic image and a corresponding adapted volumetric angiographic image 150a'. The adapted volumetric angiographic image 150a' is generated by adapting the volumetric angiographic image 150a based on the volumetric intravascular image 150b to correct one or more of the following: a vessel diameter, an image artifact, and blurring.

This example is illustrated in the third dashed box from the left in the upper branch of Fig. 3. The trained machine learning algorithm may generate more reliable corrected volumetric angiographic images as a result of its training using the adapted volumetric angiographic images 150a'.

In this example, during training, the volumetric angiographic image 150a may be inputted into the machine learning algorithm 130, and the corresponding adapted volumetric angiographic image 150a' used as the ground truth.

In this example, the machine learning algorithm is therefore performed in a supervised manner. The training of a machine learning algorithm in a supervised manner using the ground truth is described above. The machine learning algorithm may alternatively be trained in a different manner.

In one example, the operation of adapting the volumetric angiographic image 150a to correct a vessel diameter, includes adjusting a diameter of the vessel in the volumetric angiographic image 150a based on the vessel diameter at corresponding positions in the volumetric intravascular image 150b to provide an adapted volumetric angiographic image 150a' comprising the adjusted vessel diameter.

As mentioned above, the volumetric intravascular image 150b may be considered to provide a more accurate vessel diameter than the volumetric angiographic image 150a due to the limitations of volumetric angiographic images such as the poor visualization of the thin fibrous cap that covers vessel plaque, the poor visualization of thrombi, image artifacts such as blooming, and the limited image resolution of CT images outlined above. Consequently, training the machine learning algorithm 130 using adapted volumetric angiographic images in which the vessel diameters are adjusted based on their diameters in corresponding volumetric intravascular images, improves the reliability of the machine learning algorithm's predictions.

In this example, the adjusting of the vessel diameter may be performed using known image processing techniques. For instance, the vessel diameter may be deformed using elastic image registration techniques such that the diameter of the vessel in the volumetric angiographic image 150a corresponds to the vessel diameter at corresponding positions in the volumetric intravascular image 150b.

In one example, the operation of adapting the volumetric angiographic image 150a to correct an image artifact, comprises adjusting a geometry of a calcium deposit in the volumetric angiographic image 150a based on a geometry of the calcium deposit in the volumetric intravascular image 150b to provide an adapted volumetric angiographic image 150a' comprising the adjusted geometry of the calcium deposit.

As mentioned above, volumetric angiographic images can suffer from image artifacts. For instance, CT images can suffer from blooming at calcium deposits. By contrast, volumetric intravascular images do not suffer from this type of image artifact and therefore represent the geometry of calcium deposits with greater accuracy. Consequently, training the machine learning algorithm 130 using adapted volumetric angiographic images in which the geometry of calcium deposits is adjusted based on their geometry in volumetric intravascular images, improves the reliability of the machine learning algorithm's predictions.

In one example, the operation of adapting the volumetric angiographic image 150a to correct blurring comprises: evaluating a point spread function for the volumetric angiographic image 150a based on the volumetric intravascular image 150b; and applying the point spread function to the volumetric angiographic image 150a to provide an adapted volumetric angiographic image 150a' wherein the blurring is reduced.

As mentioned above, volumetric intravascular image typically have a relatively higher image resolution and a relatively higher image quality than the volumetric angiographic images and are therefore less susceptible to blurring. In this example, the relatively-higher quality volumetric intravascular image serves as a reference image that is used to evaluate the point spread function of the relatively lower quality volumetric angiographic image.

The point spread function "PSF" may be evaluated from these images using known image processing techniques. The PSF of an image describes how an ideal point source is spread-out in an image produced by an imaging system. The PSF may be determined by measuring the response of the imaging system to a point point-like object, or an object with a sharp edge. This can be achieved by applying deconvolution techniques to features that correspond to points, or sharp edges, in images generated by the imaging system. For instance, the PSF of a volumetric angiographic image may be determined using a corresponding volumetric intravascular image by identifying a point-like object, or an object with a sharp edge (e.g. a calcium deposit) in the volumetric intravascular image. Assuming there is negligible spreading of the point/ edge in the volumetric intravascular image, a deconvolution technique may be applied to the corresponding blurred point/ edge in the volumetric angiographic image in order to determine the PSF.

Alternatively, the vessel image pairs in the training data 150 may be used to train a machine learning algorithm to generate the point spread function for an inputted volumetric angiographic image. In this case, the training data 150 described above, may be used to train the machine learning algorithm by using the volumetric angiographic image and the corresponding volumetric intravascular image in each pair to evaluate a point spread function using the known image processing techniques described above. The point spread function may then be used as the ground truth for the volumetric angiographic image, to train the machine learning algorithm to generate the point spread functions of new volumetric angiographic images.

After having obtained the point spread function, the operation of applying the point spread function to the volumetric angiographic image 150a in this example may include deconvolving the volumetric angiographic image 150a with the point spread function. Known deconvolution techniques may be used for this operation. This results in an adapted volumetric angiographic image 150a' wherein blurring is reduced.

In a related example, prior to adapting the volumetric angiographic image 150a based on the volumetric intravascular image 150b, the one or more processors 110 may also be configured to reduce an image resolution of the volumetric intravascular image to a level that remains greater than an image resolution of the volumetric angiographic image 150a.

Reducing the image resolution of the volumetric angiographic image in this manner reduces the risk of introducing image artifacts in the adapted volumetric angiographic image 150a', e.g. when the adapting of the volumetric angiographic image 150a includes applying a point spread function to the volumetric angiographic image 150a. The image resolution may be reduced using known image processing techniques, such as spatial averaging, or down-sampling, for example.

In other examples, one or more further operations may also be performed using the trained machine learning algorithm 130. These are illustrated in the lower branch of dashed boxes in Fig. 3 and they are described below with reference to further examples. In these examples, a volumetric intravascular image 150^{Intra}b that represents a vessel in the vessel tree in the volumetric angiographic image 120, is acquired. The volumetric intravascular image 150^{Intra}b may be volumetric IVUS image, or a volumetric image generated by another intravascular imaging modality, such as OCT, or IVPA, for example. The volumetric intravascular image 150^{Intra}b may be acquired prior to an interventional procedure, or near the start of an interventional procedure, i.e. in a peri-procedural phase, or during an interventional procedure. The volumetric intravascular image 150^{Intra}b and the volumetric angiographic image 120 form a further vessel image pair that is then used to partially re-train the machine learning algorithm.

In these examples, the one or more processors 110 are further configured to:
receive a volumetric intravascular image 150^{Intra}b representing a vessel in the vessel tree, the volumetric intravascular image being acquired by translating an intravascular imaging device along the vessel;
receive one or more projection angiographic images 160^{Intra} representing the intravascular device within the vessel during the translation of the intravascular imaging device along the vessel;
register the vessel represented in the volumetric intravascular image 150^{Intra}b to the corresponding vessel represented in the volumetric angiographic image 150a based on a registration between the one or more projection angiographic images 160^{Intra} and the volumetric angiographic image 150a, to provide a further vessel image pair, the further vessel image pair comprising the volumetric angiographic image 150a representing the vessel and the corresponding registered volumetric intravascular image 150^{Intra}b^{Reg} representing the vessel; and
perform further training of the machine learning algorithm 130 using the further vessel image pair; and
wherein the inputting S120 the volumetric angiographic image 120 into a machine learning algorithm 130, comprises inputting the volumetric angiographic 120 image into the further-trained machine learning algorithm 130'.

The above operations are illustrated in Fig. 3. For instance, the volumetric intravascular image 150^{Intra}b is illustrated on the left-hand side of Fig. 3. The volumetric intravascular image 150^{Intra}b represents a vessel in the same vessel tree as in the volumetric angiographic image 120. The one or more projection angiographic images 160^{Intra} representing the intravascular device within the vessel during the translation of the intravascular imaging device along the vessel are also illustrated on the left-hand side of Fig. 3. The projection angiographic image(s) 160^{Intra} may be acquired by a projection X-ray imaging system or a 2D ultrasound imaging system, for example. For instance, the projection angiographic image(s) 160^{Intra} may be acquired by the projection X-ray imaging system 210 illustrated in Fig. 1 whilst translating the intravascular imaging device 220 along the vessel.

The operation of registering the vessel represented in the volumetric intravascular image 150^{Intra}b to the corresponding vessel represented in the volumetric angiographic image 150a based on a registration between the one or more projection angiographic images 160^{Intra} and the volumetric angiographic image 150a, is illustrated in the second dashed box from the left in the lower branch of Fig. 3. The projection angiographic image(s) 160^{Intra} represent the intravascular device within the vessel during the translation of the intravascular imaging device along the vessel. Consequently, these images show the position and orientation of the intravascular imaging transducer at the points in time at which it generates its planar images (representing cross sectional slices through different positions along an axis of a vessel) that are then stacked to form the volumetric intravascular image 150^{Intra}b. The registration between the projection angiographic image(s) 160^{Intra} and the volumetric angiographic image 150a is therefore used to determine the position and orientation of the intravascular imaging transducer in the volumetric angiographic image 150a, and hence to register the vessel represented in the volumetric intravascular image 150^{Intra}b to the corresponding vessel represented in the volumetric angiographic image 150a. This registration may be performed using known image registration techniques. For instance, an initial inelastic registration may be performed in order to roughly align the projection angiographic images 160^{Intra} to the volumetric angiographic image 150a. An elastic registration may subsequently be performed in order to deform the shape of the vessel path in the projection angiographic images 160^{Intra} such that it corresponds to the shape of the vessel path in the volumetric angiographic image 150a. In practice, a single projection angiographic image 160^{Intra} may be used in this operation because a single projection angiographic image 160^{Intra} be used to identify a vessel in the volumetric angiographic image 150a in which the intravascular imaging device is located.

The result of the registration operations described above is to provide a further vessel image pair, i.e. the volumetric angiographic image 150a representing the vessel and the corresponding registered volumetric intravascular image 150^{Intra}b^{Reg} representing the vessel. This vessel image pair is then used to perform further training of the machine learning algorithm 130, e.g. using the training techniques described above. Thus operation is illustrated in the fifth box from the left in the lower branch in Fig. 3. It is noted that this re-training operation may be partial, in the sense that it may suffice to re-train only some layers of the above-described neural networks, rather than all layers. This reduces the time required for re-training the machine learning algorithm 130.

The result of these operations is to provide a further-trained machine learning algorithm 130' (illustrated in the lower right-hand portion of Fig. 3, that is tailored to improving the image quality issues in the specific volumetric angiographic image 120. As illustrated via the lowermost solid arrow in Fig. 3, in this example, the volumetric angiographic image 120 is inputted into the further-trained machine learning algorithm 130' in order to generate the corrected volumetric angiographic image 140'. The corrected volumetric angiographic images 140' that are generated by the re-trained machine learning algorithm are more reliable as a result of the re-training.

One or more further operations may also be performed on the further vessel image pair in the context re-training the machine learning algorithm 130. These are illustrated in the lower branch of dashed boxes in Fig. 3. These further operations correspond to the operations that are performed in the corresponding dashed boxes in the upper branch in Fig. 3 for the (initial) training of the machine learning algorithm 130, and consequently some of their details are omitted here for brevity.

In one example, the one or more processors 110 are further configured to:
adapt the volumetric angiographic image 120 in the vessel image pair based on the corresponding registered volumetric intravascular image 150^{Intra}b^{Reg} in the vessel image pair to correct one or more of the following: a vessel diameter, an image artifact, and blurring; and
wherein during the further training, the volumetric angiographic image 120 is inputted into the machine learning algorithm 130, and the corresponding adapted volumetric angiographic image 120' is used as the ground truth.

In this example, the machine learning algorithm is therefore performed in a supervised manner. The training of a machine learning algorithm in a supervised manner using the ground truth is described above. As also mentioned above in relation to the (initial) training of the machine learning algorithm 130; instead of inputting the volumetric angiographic images 150a into the machine learning algorithm 130 and using the corresponding adapted volumetric angiographic image 150a' used as the ground truth, the machine learning algorithm may be trained in a different manner.

In one example, the operation of adapting the volumetric angiographic image 120 to correct a vessel diameter, comprises adjusting a diameter of the vessel in the volumetric angiographic image 120 based on the vessel diameter at corresponding positions in the volumetric intravascular image 150^{Intra}b^{Reg} to provide an adapted volumetric angiographic image 120' comprising the adjusted vessel diameter.

The operation of adapting the volumetric angiographic image 120 to correct a vessel diameter was described above in relation to the (initial) training of the machine learning algorithm 130, and consequently it is not repeated here. In contrast to the adapting described above, here the adapting is preformed on the volumetric angiographic image 120 that is inputted into the trained machine learning algorithm rather than on the volumetric angiographic image 150a from the training data 150, and here the adapting is performed based on the volumetric intravascular image 150^{Intra}b^{Reg} rather than based on the volumetric intravascular image 150b from the training data 150.

In one example, the operation of adapting the volumetric angiographic image 120 to correct an image artifact, comprises adjusting a geometry of a calcium deposit in the volumetric angiographic image 120 based on a geometry of the calcium deposit in the volumetric intravascular image 150^{Intra}b^{Reg} to provide an adapted volumetric angiographic image 120' comprising the adjusted geometry of the calcium deposit.

The operation of adapting a volumetric angiographic image to correct an image artifact was described above in relation to the (initial) training of the machine learning algorithm 130, and consequently it is not repeated here.

In one example, the operation of adapting the volumetric angiographic image 120 to correct blurring, comprises:
evaluating a point spread function for the volumetric angiographic image 120 based on the volumetric intravascular image 150^{Intra}b^{Reg}; and
applying the point spread function to the volumetric angiographic image 120 to provide an adapted volumetric angiographic image 120' wherein the blurring is reduced.

The operation of adapting a volumetric angiographic image to correct blurring using a point spread function was described above in relation to the (initial) training of the machine learning algorithm 130, and consequently it is not repeated here.

In one example, prior to adapting the volumetric angiographic image 120 based on the volumetric intravascular image 150^{Intra}b^{Reg}, the one or more processors 110 are further configured to reduce an image resolution of the volumetric intravascular image to a level that remains greater than an image resolution of the volumetric angiographic image 120.

As mentioned above, reducing the image resolution of the volumetric angiographic image in this manner reduces the risk of introducing image artifacts in the adapted volumetric angiographic image 120', e.g. when the adapting of the volumetric angiographic image 120 includes applying a point spread function to the volumetric angiographic image 120. The image resolution may be reduced using known image processing techniques, such as spatial averaging, or down-sampling, for example.

It is noted that in addition to the one or more processors 110, the system 100 may also include one or more of: a projection angiographic imaging system for providing the projection angiographic image(s) 160^{Intra}, such as for example the projection X-ray imaging system 210 illustrated in Fig. 1; an intravascular imaging device 220 for generating the volumetric intravascular image 150^{Intra}b; an associated intravascular imaging device controller 230; an injector (not illustrated in Fig. 1) for injecting a contrast agent into the vasculature; a display, such as the monitor 240 illustrated in Fig. 1, for displaying the corrected volumetric angiographic image 140, other outputs generated by the one or more processors 110, and so forth; a patient bed 250; and a user input device (not illustrated in Fig. 1) configured to receive user input in relation to the operations performed by the one or more processors 110, such as a keyboard, a mouse, a touchscreen, and so forth.

In another example, a computer program product is provided. The computer program product comprises instructions which when executed by one or more processors 110, cause the one or more processors to carry out a method of improving image quality in volumetric angiographic images. The method comprises:
receiving S 110 a volumetric angiographic image 120 representing a vessel tree;
inputting S 120 the volumetric angiographic image 120 into a machine learning algorithm 130, the machine learning algorithm being trained to generate, based on the inputted volumetric angiographic image, a corrected volumetric angiographic image 140 wherein an image quality of the vessel tree is improved as compared to in the inputted volumetric angiographic image; and
outputting S 130 the corrected volumetric angiographic image 140; and
wherein the machine learning algorithm 130 is trained to generate the corrected volumetric angiographic image 140 using training data 150 comprising a plurality of vessel image pairs, each vessel image pair comprising a volumetric angiographic image 150a representing a vessel and a corresponding volumetric intravascular image 150b representing the vessel.

In another example, a computer-implemented method of improving image quality in volumetric angiographic images, is provided. The method comprises:
receiving S 110 a volumetric angiographic image 120 representing a vessel tree;
inputting S 120 the volumetric angiographic image 120 into a machine learning algorithm 130, the machine learning algorithm being trained to generate, based on the inputted volumetric angiographic image, a corrected volumetric angiographic image 140 wherein an image quality of the vessel tree is improved as compared to in the inputted volumetric angiographic image; and
outputting S 130 the corrected volumetric angiographic image 140; and
wherein the machine learning algorithm 130 is trained to generate the corrected volumetric angiographic image 140 using training data 150 comprising a plurality of vessel image pairs, each vessel image pair comprising a volumetric angiographic image 150a representing a vessel and a corresponding volumetric intravascular image 150b representing the vessel.

The above examples are to be understood as illustrative of the present disclosure, and not restrictive. Further examples are also contemplated. For instance, the examples described in relation to a system, may also be provided by a computer program product, or by a computer-implemented method, or by a computer-readable storage medium, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1. A system (100) for improving image quality in volumetric angiographic images, the system comprising one or more processors (110) configured to:
receive (S 110) a volumetric angiographic image (120) representing a vessel tree;
input (S120) the volumetric angiographic image (120) into a machine learning algorithm (130), the machine learning algorithm being trained to generate, based on the inputted volumetric angiographic image, a corrected volumetric angiographic image (140) wherein an image quality of the vessel tree is improved as compared to in the inputted volumetric angiographic image; and
output (S130) the corrected volumetric angiographic image (140); and
wherein the machine learning algorithm (130) is trained to generate the corrected volumetric angiographic image (140) using training data (150) comprising a plurality of vessel image pairs, each vessel image pair comprising a volumetric angiographic image (150a) representing a vessel and a corresponding volumetric intravascular image (150b) representing the vessel.

2. The system according to claim 1, wherein for at least some of the vessel image pairs in the training data (150), the volumetric intravascular image (150b) is registered to the corresponding volumetric angiographic image (150a).

3. The system according to any previous claim, wherein for at least some of the vessel image pairs in the training data (150):
the machine learning algorithm (130) is trained to generate the corrected volumetric angiographic image (140) using the volumetric angiographic image and a corresponding adapted volumetric angiographic image (150a'); and
wherein the adapted volumetric angiographic image (150a') is generated by adapting the volumetric angiographic image (150a) based on the volumetric intravascular image (150b) to correct one or more of the following: a vessel diameter, an image artifact, and blurring.

4. The system according to claim 3, wherein during training, the volumetric angiographic image (150a) is inputted into the machine learning algorithm (130), and the corresponding adapted volumetric angiographic image (150a') is used as the ground truth.

5. The system according to claim 3 or claim 4, wherein the adapting the volumetric angiographic image (150a) to correct a vessel diameter, comprises adjusting a diameter of the vessel in the volumetric angiographic image (150a) based on the vessel diameter at corresponding positions in the volumetric intravascular image (150b) to provide an adapted volumetric angiographic image (150a') comprising the adjusted vessel diameter.

6. The system according to any one of claims 3-5, wherein the adapting the volumetric angiographic image (150a) to correct an image artifact, comprises adjusting a geometry of a calcium deposit in the volumetric angiographic image (150a) based on a geometry of the calcium deposit in the volumetric intravascular image (150b) to provide an adapted volumetric angiographic image (150a') comprising the adjusted geometry of the calcium deposit.

7. The system according to any one of claims 3-6, wherein the adapting the volumetric angiographic image (150a) to correct blurring comprises:
evaluating a point spread function for the volumetric angiographic image (150a) based on the volumetric intravascular image (150b); and
applying the point spread function to the volumetric angiographic image (150a) to provide an adapted volumetric angiographic image (150a') wherein the blurring is reduced.

8. The system according to any previous claim, wherein the one or more processors (110) are further configured to:
receive a volumetric intravascular image (150^{Intra}b) representing a vessel in the vessel tree, the volumetric intravascular image being acquired by translating an intravascular imaging device along the vessel;
receive one or more projection angiographic images (160^{Intra}) representing the intravascular device within the vessel during the translation of the intravascular imaging device along the vessel;
register the vessel represented in the volumetric intravascular image (150^{Intra}b) to the corresponding vessel represented in the volumetric angiographic image (150a) based on a registration between the one or more projection angiographic images (160^{Intra}) and the volumetric angiographic image (150a), to provide a further vessel image pair, the further vessel image pair comprising the volumetric angiographic image (150a) representing the vessel and the corresponding registered volumetric intravascular image (150^{Intra}b^{Reg}) representing the vessel; and
perform further training of the machine learning algorithm (130) using the further vessel image pair; and
wherein the inputting (S120) the volumetric angiographic image (120) into a machine learning algorithm (130), comprises inputting the volumetric angiographic (120) image into the further-trained machine learning algorithm (130').

9. The system according to claim 8, wherein the one or more processors (110) are further configured to:
adapt the volumetric angiographic image (120) in the vessel image pair based on the corresponding registered volumetric intravascular image (150^{Intra}b^{Reg}) in the vessel image pair to correct one or more of the following: a vessel diameter, an image artifact, and blurring; and
wherein during the further training, the volumetric angiographic image (120) is inputted into the machine learning algorithm (130), and the corresponding adapted volumetric angiographic image (120') is used as the ground truth.

10. The system according to claim 9, wherein the adapting the volumetric angiographic image (120) to correct a vessel diameter, comprises adjusting a diameter of the vessel in the volumetric angiographic image (120) based on the vessel diameter at corresponding positions in the volumetric intravascular image (150^{Intra}b^{Reg}) to provide an adapted volumetric angiographic image (120') comprising the adjusted vessel diameter.

11. The system according to any one of claims 9 - 10, wherein the adapting the volumetric angiographic image (120) to correct an image artifact, comprises adjusting a geometry of a calcium deposit in the volumetric angiographic image (120) based on a geometry of the calcium deposit in the volumetric intravascular image (150^{Intra}b^{Reg}) to provide an adapted volumetric angiographic image (120') comprising the adjusted geometry of the calcium deposit.

12. The system according to any one of claims 9 - 11, wherein the adapting the volumetric angiographic image (120) to correct blurring, comprises:
evaluating a point spread function for the volumetric angiographic image (120) based on the volumetric intravascular image (150^{Intra}b^{Reg}); and
applying the point spread function to the volumetric angiographic image (120) to provide an adapted volumetric angiographic image (120') wherein the blurring is reduced.

13. The system according to any one of claims 3 - 7, or any one of claims 9 - 12, wherein prior to adapting the volumetric angiographic image (150a, 120) based on the volumetric intravascular image (150b, 150^{Intra}b^{Reg}), the one or more processors (110) are further configured to reduce an image resolution of the volumetric intravascular image to a level that remains greater than an image resolution of the volumetric angiographic image (150a, 120).

14. A computer program product comprising instructions which when executed by one or more processors (110), cause the one or more processors to carry out a method of improving image quality in volumetric angiographic images, the method comprising:
receiving (S 110) a volumetric angiographic image (120) representing a vessel tree;
inputting (S120) the volumetric angiographic image (120) into a machine learning algorithm (130), the machine learning algorithm being trained to generate, based on the inputted volumetric angiographic image, a corrected volumetric angiographic image (140) wherein an image quality of the vessel tree is improved as compared to in the inputted volumetric angiographic image; and
outputting (S130) the corrected volumetric angiographic image (140); and
wherein the machine learning algorithm (130) is trained to generate the corrected volumetric angiographic image (140) using training data (150) comprising a plurality of vessel image pairs, each vessel image pair comprising a volumetric angiographic image (150a) representing a vessel and a corresponding volumetric intravascular image (150b) representing the vessel.

15. A computer-implemented method of improving image quality in volumetric angiographic images, the method comprising:
receiving (S 110) a volumetric angiographic image (120) representing a vessel tree;
inputting (S120) the volumetric angiographic image (120) into a machine learning algorithm (130), the machine learning algorithm being trained to generate, based on the inputted volumetric angiographic image, a corrected volumetric angiographic image (140) wherein an image quality of the vessel tree is improved as compared to in the inputted volumetric angiographic image; and
outputting (S130) the corrected volumetric angiographic image (140); and
wherein the machine learning algorithm (130) is trained to generate the corrected volumetric angiographic image (140) using training data (150) comprising a plurality of vessel image pairs, each vessel image pair comprising a volumetric angiographic image (150a) representing a vessel and a corresponding volumetric intravascular image (150b) representing the vessel.
